# EUROPEAN PATENT APPLICATION

(11) **EP 3 412 495 A1**
(43) Date of publication of application: **12.12.2018**
(21) Application number: 17760175.4
(22) Date of filing: 03.03.2017
(51) Int. Cl.: B60L 11/18, B60L 5/00, H01M 10/44, H01M 10/46, H02J 7/00, H02J 50/12

(54) **VEHICLE**

(30) Priority: 04.03.2016 JP 2016042525
(71) Applicant: Yamaha Hatsudoki Kabushiki Kaisha, Iwata-shi, Shizuoka 438-8501 (JP)
(72) Inventor: MIYAZAKI, Toshinori, Iwata-shi Shizuoka 438-8501 (JP)
(74) Representative: Stöckeler, Ferdinand
(86) International application number: PCT/JP2017/008509
(87) International publication number: WO 2017/150713

(57) **Abstract**

A vehicle 100 includes a power-receiving coil L2 that wirelessly receives power from a power transmission coil L1, a transmission route unit that electrically couples the power-receiving coil L2 and a cell of a battery 96 via a cable 15, a first switch 2 that is provided on the transmission route unit, and a first switch control circuit 21 that controls the first switch 2. The first switch 2 is provided in a position on a transmission route between the power-receiving coil L2 and the cell of the battery 96, which is closer to the power-receiving coil L2 than to the cell of the battery 96 and is controlled by the first switch control circuit 21 so as to, when a voltage that is applied between the power-receiving coil L2 and the cell of the battery 96 exceeds a threshold, turn off conduction between the power-receiving coil L2 and the cell of the battery.

## Description

### TECHNICAL FIELD

The present teaching relates to a technology in which, in a vehicle, a battery is charged using power that is wirelessly supplied.

### BACKGROUND ART

In recent years, a wireless power supply system that wirelessly supplies power has been developed. In the wireless power supply system, power is transmitted between a coil on a power transmission side and a coil on a power-receiving side, which are arranged apart from one another. Such a wireless power supply system is used as a charging system for a battery which is mounted in a vehicle.

For example, a bicycle described in Japanese Laid-open Patent Publication No. 2012-34487 (Patent Document 1 below) includes a battery unit that supplies power to a motor. The battery unit is attachable and removable. A user is able to perform charging on the battery unit that has been removed using a predetermined adapter. Also, a power-receiving coil is arranged in a front basket of the bicycle. Power transmission is performed using magnetic resonance of the power-receiving coil and a coil on a power transmission side. Transmitted power is stored in a rechargeable battery in the battery unit.

### CITATION LIST

### PATENT DOCUMENT

Patent Document 1: Japanese Patent Application Publication No. 2012-34487

### SUMMARY OF INVENTION

### PROBLEMS TO BE SOLVED BY INVENTION

When a system that charges a battery using power that has been wirelessly received is mounted in a vehicle, an arrangement position of a power-receiving coil is restricted depending on a structure of a coil on a power transmission side. Also, it is required to ensure insulation properties of a power transmission line between the power-receiving coil and the battery. Therefore, the transmission line is preferably short. In some cases, when the transmission line is shortened, an arrangement of the power-receiving coil and the battery is restricted. As described above, there are various restrictions on a layout of a charging system in a vehicle.

Therefore, the present application discloses a structure that is able to increase, in a vehicle in which a battery mounted on the vehicle is charged using power that is wirelessly supplied, the degree of design freedom of a layout of a charging system in the vehicle.

### SOLUTION TO PROBLEM AND ADVANTAGEOUS EFFECTS OF INVENTION

Conventionally, vehicles which include a power-receiving circuit that wirelessly receives power from a power transmission circuit and a battery that is charged by the received power have been proposed. In some cases, in such a vehicle, for example, as in the above-described vehicle described in Japanese Patent Application Publication No. 2012-34487, a battery is attachable and removable. Also, there are cases in which a battery control unit that monitors a state of a battery and controls charging and discharging of the battery is provided in a vehicle. When the battery is fully charged or when the battery is put in an abnormal state, the battery control unit cuts off a charging route.

For example, when, while power that has been received by the power-receiving circuit is being charged in the battery, a charging route to the battery is cut off or the battery is removed, the power-receiving circuit is put in a no-load state. The inventor found that, when the power-receiving circuit is put in a no-load state, power that has been generated in a coil has no place to go and a voltage of the power-receiving circuit rapidly rises. When the voltage of the power-receiving circuit rises, a high voltage is applied between the power-receiving circuit and the battery control unit. It is required to strengthen insulation in a part to which a high voltage is applied. Furthermore, there is a probability that a high voltage is applied to a transmission route between a power-receiving coil and a cell of the battery. Thus, restrictions are imposed on a length of the transmission route and a place in which the transmission route is arranged. As a result, it was found that there are cases in which an arrangement of a device, such as the power-receiving coil, the battery, or the like, which is mounted in the vehicle is restricted. That is, it was found that the degree of design freedom of a layout of a charging system in a vehicle is reduced.

Then, the inventor examined a structure in which, when the power-receiving circuit is put in a no-load state and a voltage is about to rise, occurrence of a high voltage is prevented on the transmission route. First, the inventor examined solving this problem by performing a wireless communication between a power transmission circuit and a power-receiving circuit. That is, the inventor examined a structure in which, when the battery is fully charged, when the battery is removed, or the like, an instruction to stop power transmission is given to a power transmission circuit via a wireless communication. However, in this structure, a time lag from detection of a no-load state on a power-receiving side to transmission of the instruction to a power transmission side via a wireless communication occurs. It was found that there are cases in which, during the time lag, the voltage of the power-receiving circuit increases to exceed a predetermined value. Particularly, it was found that there is a tendency that, under a poor radio wave condition, it takes time to perform a wireless communication and the voltage of the power-receiving circuit rises and exceeds the predetermined value before power transmission is stopped.

Then, the inventor examined a structure in which, even when the power-receiving circuit is put in a no-load state, a rise of the voltage of the transmission line between the power-receiving circuit and the battery is suppressed. In the examination, the inventor focused on that, when the power-receiving circuit is put in a no-load state, a position on the transmission line which is close to the battery is electrically cut off. The inventor came up with an idea that, using the above-described phenomenon, when the power-receiving circuit is put in a no-load state, a position on the transmission line which is close to the power-receiving circuit on a side opposite to the battery is cut off. Thus, it is possible to suppress, on the transmission line, a rise of voltage between a cut-off position that is close to the battery and a cut-off position that is close to the power-receiving circuit.

The inventor further examined and, as a result, arrived at a structure in which, when a voltage between the battery and the power-receiving coil rises, conduction in a position on the transmission line which is closer to the power-receiving coil than to the battery is cut off. Thus, regardless of whether a position is close to the battery is cut off, it is possible to limit a range in which a voltage rises on the transmission line between the battery and the power-receiving coil. A range in which insulation of an interconnect is to be strengthened is reduced by limiting the range in which the voltage of the transmission line rises. Also, a length of the transmission line or a position in which the transmission line is arranged is hardly restricted. Therefore, restrictions on an arrangement of the power-receiving coil, the battery, or the like are reduced. As a result, it is possible to increase the degree of design freedom of a layout of a charging system in a vehicle. Based on this finding, the inventor arrived at embodiments below.

### (First Structure)

A vehicle in a first structure according to an embodiment of the present invention includes a power-receiving circuit including a coil that receives power from a power-transmission circuit in a non-contact manner, a battery control unit that is coupled to the power-receiving circuit via a cable and controls charging of a battery by power that is supplied from the power-receiving circuit via the cable, a switch that turns on and off conduction between the power-receiving circuit and the battery control unit, and a switch control circuit that, when a voltage that is output from the power-receiving circuit to the battery control unit exceeds a threshold, controls the switch and cuts off conduction between the power-receiving circuit and the battery control unit. A length of a transmission line between the battery control unit and the switch is longer than a length of a transmission line between the coil of the power-receiving circuit and the switch (First Structure).

In other words, the vehicle of the above-described first structure includes a power-receiving coil that wirelessly receives power from a power-transmission coil, a transmission route unit that electrically couples the power-receiving coil and a cell of a battery via a cable, a first switch that is provided on the transmission route unit and turns on and off conduction between the power-receiving coil and the cell of the battery, and a first switch control circuit that controls the first switch and turns on and off conduction between the power-receiving coil and the cell of the battery. The first switch is provided in a position on a transmission route between the power-receiving coil and the cell of the battery, which is closer to the power-receiving coil than to the cell of the battery and, is controlled by the first switch control circuit so as to, when a voltage that is applied between the power-receiving coil and the cell of the battery exceeds a threshold, turn off conduction between the power-receiving coil and the cell of the battery.

According to the first structure, the power-receiving circuit and the battery control unit are coupled via the cable. Also, the power-receiving coil and the cell of the battery are electrically coupled via the cable. Therefore, the power-receiving coil and the cell of the battery may be arranged in positions apart from one another. Thus, the degree of freedom of a layout is increased. Furthermore, the first switch is arranged in a position on the transmission route between the power-receiving circuit and the battery control unit that are coupled via the cable, which is closer to the coil of the power-receiving circuit than to the battery control unit. Also, the first switch is provided in a position on the transmission route between the power-receiving coil and the cell of the battery, which is closer to the power-receiving coil than to the cell of the battery. Also, the switch control circuit controls the switch such that, when a voltage that is applied between the power-receiving coil and the cell of the battery exceeds the threshold, the switch cuts off conduction between the power-receiving coil and the cell of the battery. Thus, when the power-receiving circuit is put in a no-load state and a voltage rises, conduction between the power-receiving coil and the cell of the battery is cut off by the first switch. A voltage between the first switch and the cell of the battery is not caused to rise. A range in which a voltage rises on a transmission line between the power-receiving coil and the cell of the battery is limited to a range between the power-receiving coil and the first switch. Therefore, for example, when the power-receiving circuit is put in a no-load state, a range in which a voltage rises on the transmission line between the power-receiving coil and the cell of the battery is reduced. Thus, a range in which insulation is to be strengthened on the transmission line is reduced. Also, restraints on a length of the transmission line and a place in which the transmission line is arranged are reduced. Therefore, restraints on an arrangement of a device, such as a power-receiving coil, a battery, or the like, which is mounted on a vehicle, are reduced. As a result, the degree of freedom of a layout of a charging system in a vehicle is increased.

### (Second Structure)

In the above-described first structure, the vehicle may further include a case that stores the power-receiving circuit. That is, the vehicle may further include a power-receiving coil case that stores the power-receiving coil. In this case, a structure in which the cable that is coupled to the power-receiving circuit is pulled out of the case, and the first switch is provided in the case that stores the power-receiving circuit may be employed. That is, a structure in which at least a part of the cable that electrically couples the power-receiving coil and the cell of the battery is arranged outside the power-receiving coil case, and the first switch is provided in the power-receiving coil case may be employed (Second Structure). Thus, it is possible to reduce the occurrence of a rise in voltage in a no-load state outside the case. Therefore, the degree of freedom of the layout of the charging system in the vehicle is further increased.

### (Third Structure)

In the above-described second structure, the first switch control circuit may be provided in the power-receiving coil case (Third Structure). Thus, the degree of freedom of the layout is further increased.

### (Fourth Structure)

In any one of the above-described first to third structures, the first switch may be provided on a substrate on which the power-receiving circuit is provided. That is, the first switch may be provided on a substrate to which the power-receiving coil is electrically coupled (Fourth Structure). It is possible to reduce the occurrence of a rise in voltage in a no-load state outside the substrate by providing the power-receiving circuit, that is, the power-receiving coil, and the first switch on the same substrate. Therefore, the degree of freedom of the layout of the charging system in the vehicle is further increased.

### (Fifth Structure)

In any one of the above-described first to fourth structures, the first switch control circuit may be provided on a substrate to which the power-receiving coil is electrically coupled (Fifth Structure). Thus, the degree of freedom of the layout of the charging system in the vehicle is further increased.

### (Sixth Structure)

In any one of the above-described first to fifth structures, the vehicle may further include a rectifier circuit that converts an AC voltage generated in the power-receiving coil to a DC voltage. In this case, the first switch is provided between the rectifier circuit and the cell of the battery (Sixth Structure). Thus, it is possible to limit a range in which the DC voltage that has been converted by the rectifier circuit is applied to between the rectifier circuit and the first switch. Therefore, it is possible to effectively reduce a part in which a DC voltage rises in a no-load state on a transmission line. Therefore, the degree of freedom of the layout of the charging system in the vehicle is further increased.

### (Seventh Structure)

In any one of the above-described first to sixth structures, the vehicle may further include a second switch that is provided on the transmission route unit and turns on and off conduction between the power-receiving coil and the cell of the battery. The second switch may be provided in a position on the transmission route between the power-receiving coil and the cell of the battery, which is closer to the cell of the battery than to the power-receiving coil and the first switch. In this case, the first switch control circuit controls the first switch such that, when conduction between the power-receiving coil and the cell of the battery is turned off by the second switch, and thereby, a voltage that is applied between the power-receiving coil and the cell of the battery exceeds a threshold, the first switch turns off conduction between the power-receiving coil and the cell of the battery (Seventh Structure).

In the above-described seventh structure, the second switch turns off conduction between the power-receiving coil and the cell of the battery and, when the power-receiving coil is put in a no-load state, a voltage between the power-receiving coil and the second switch rises. When the voltage rises and exceeds the threshold, the first switch control circuit turns off the first switch provided between the power-receiving coil and the second switch. Thus, a voltage between the first switch and the second switch no longer rises. That is, a rise in voltage on a transmission line between the battery and the power-receiving coil is reduced. Therefore, the degree of freedom of the layout of the charging system in the vehicle is further increased.

### (Eighth Structure)

In the above-described seventh structure, the vehicle may further include a battery case that stores the cell of the battery. In this case, at least a part of the cable that electrically couples the cell of the battery and the power-receiving coil may be arranged outside the battery case. The second switch may be provided in the battery case (Eighth Structure). Thus, the degree of freedom of the layout of the charging system in the vehicle is further increased.

### (Ninth Structure)

In the above-described seventh structure, the vehicle may further include a battery case that stores the cell of the battery. The battery case may be configured to be attachable to and removable from the vehicle. At least a part of the cable that electrically couples the cell of the battery and the power-receiving coil may be arranged outside the battery case. In this case, the second switch may be a contact point of the transmission line unit that is cut off when the battery case is removed from the vehicle (Ninth Structure). Thus, it is possible to suppress a rise in voltage on the transmission line between the power-receiving coil and the cell of the battery when the battery case is removed from the vehicle, and thereby, the power-receiving circuit is put in a no-load state. Therefore, the degree of freedom of the layout of the charging system in the vehicle is further increased.

### (Tenth Structure)

In any one of the above-described seventh to ninth structures, the vehicle may further include a second switch control circuit that controls the second switch and turns on and off conduction between the power-receiving coil and the cell of the battery (Tenth Structure). Thus, the first switch is controlled by the first switch control circuit and the second switch that is provided in a position that is closer to the cell of the battery than the first switch is controlled by the second switch control circuit. Thus, when the second switch control circuit controls the second switch and turns off conduction between the power-receiving coil and the cell of the battery, and thereby, the power-receiving coil is put in a no-load state, the first switch control circuit turns off the first switch, and thereby, it is possible to suppress a rise in voltage on the transmission line between the power-receiving coil and the cell of the battery. Therefore, the degree of freedom of the layout of the charging system in the vehicle is further increased.

### (Eleventh Structure)

In the above-described tenth structure, the vehicle may further include a battery case that stores the cell of the battery. At least a part of the cable that electrically couples the cell of the battery and the power-receiving coil may be arranged outside the battery case. The second switch may be provided in the battery case (Eleventh Structure). Thus, the degree of freedom of the layout of the charging system in the vehicle is further increased.

### (Twelfth Structure)

In any one of the above-described first to tenth structures, a structure in which the first switch control circuit is operated by power that has been received by the power-receiving coil may be employed (Twelfth Structure). Thus, a structure in which power is externally supplied from the outside of the power-receiving circuit for detection of a no-load state and control of the first switch is not necessary. Therefore, it is possible to suppress a rise in voltage in a no-load state by controlling the first switch by power that has been received by the power-receiving circuit. As a result, the degree of freedom of the layout of the charging system in the vehicle is further increased.

### BRIEF DESCRIPTION OF DRAWINGS

[FIG. 1] FIG. 1 is a diagram illustrating an example of a structure of a vehicle in an embodiment.
[FIG. 2] FIG. 2 is a functional block diagram illustrating an example of a structure of a charging system of the vehicle illustrated in FIG. 1.
[FIG. 3] FIG. 3 is a diagram illustrating a specific example of a structure of a power transmission circuit, a power-receiving circuit, a switch, a switch control circuit, and a battery control unit.
[FIG. 4A] FIG. 4A is a plan view illustrating an example of a structure inside a case in which the power-receiving circuit is stored.
[FIG. 4B] FIG. 4B is a cross-sectional view illustrating a cross-sectional structure taken along the line B-B in FIG. 4A.
[FIG. 5] FIG. 5 is a plan view illustrating an example of a structure inside a case in which the battery control unit is stored.
[FIG. 6] FIG. 6 is a diagram illustrating the vehicle in the embodiment.

### DESCRIPTION OF EMBODIMENTS

A vehicle according to an embodiment of the present teaching will be described below with reference to the accompanying drawings. In this embodiment, as an example, a case in which a vehicle is an electric power-assisted bicycle will be described. In the drawings, the same or corresponding parts are denoted by the same reference symbol and the description for the parts is not repeated. Also, dimensions of a component member in each drawing do not closely represent actual dimensions of the component member, a dimension ratio of each component member, or the like.

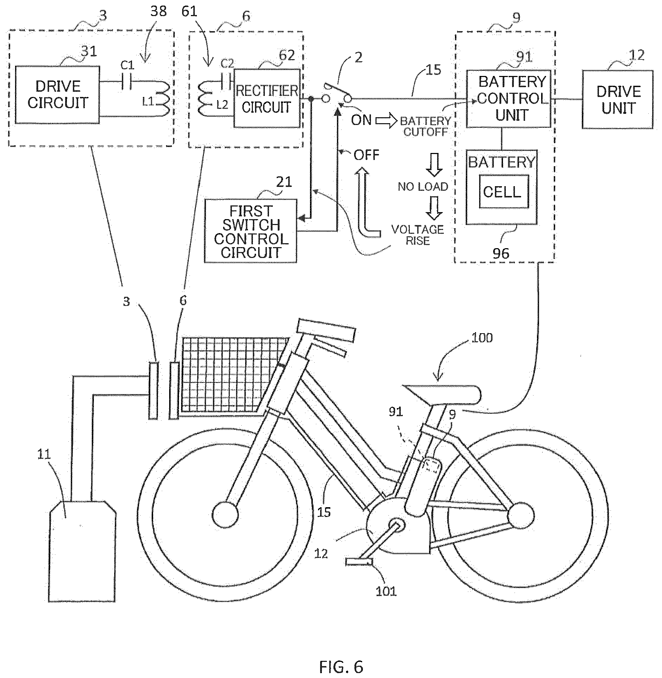

FIG. 6 is a diagram illustrating a vehicle in this embodiment. In FIG. 6, a vehicle 100 includes a power-receiving coil L2 that wirelessly receives power from a power transmission coil L1, a transmission route unit that electrically couples the power-receiving coil L2 and a cell of a battery 96 via a cable 15, a first switch 2 that is provided in the transmission route unit and turns on and off conduction between the power-receiving coil L2 and the cell of the battery 96, and a first switch control circuit 21 that controls the first switch 2 and turns on and off conduction of the power-receiving coil L2 and the cell of the battery 96. The first switch 2 is provided in a position on a transmission route between the power-receiving coil L2 and the cell of the battery 96, which is closer to the power-receiving coil L2 than to the cell of the battery 96, and is controlled by the first switch control circuit 21 so as to, when a voltage that is applied between the power-receiving coil L2 and the cell of the battery 96 exceeds a threshold, turn off conduction between the power-receiving coil L2 and the cell of the battery 96.

For example, when a charging route from the power-receiving coil L2 to the cell of the battery 96 is cut off, a power-receiving circuit including the power-receiving coil L2 is put in a no-load state, and a voltage of the transmission route rises, conduction between the power-receiving coil L2 and the cell of the battery 96 is cut off by the first switch 2. A voltage between the first switch 2 and the cell of the battery 96 is not caused to rise. A range in which a voltage rises on the transmission line between the power-receiving coil L2 and the cell of the battery 96 is limited to a range between the power-receiving coil L2 and the first switch 2. Therefore, the range in which a voltage rises on the transmission line between the power-receiving coil L2 and the cell of the battery 96 is reduced. Thus, a range in which insulation is to be strengthened on the transmission route is reduced. Also, restrictions on a length of the transmission line and a place in which the transmission line is arranged are reduced. Therefore, restrictions on an arrangement of a device, such as the power-receiving coil L2, the battery 96, or the like, which is mounted on the vehicle 100, are reduced. As a result, the degree of freedom of a layout of a charging system in the vehicle 100 is increased.

### [Example of Structure of Vehicle]

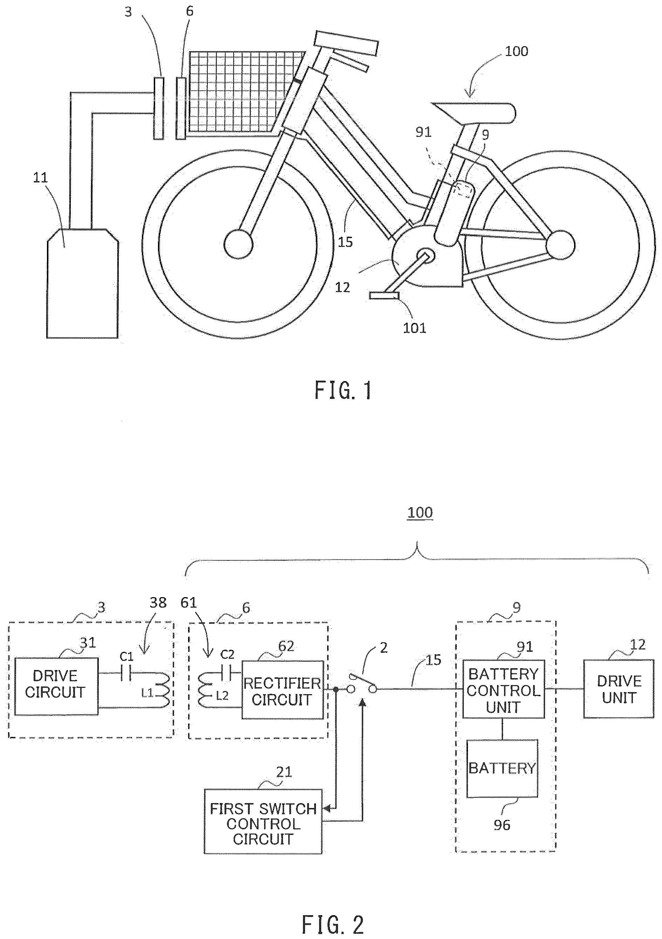

FIG. 1 is a diagram illustrating an example of a structure of a vehicle in this embodiment. A bicycle 100 is a vehicle that includes a battery unit 9 including a battery and a vehicle load that is operated by power of the battery. In this example, the bicycle 100 is an electric power-assisted bicycle. The bicycle 100 includes, as the vehicle load, a drive unit 12 that includes a power unit (a motor) that assists pedal stepping force of pedals 101.

The bicycle 100 includes a power-receiving circuit 6 that wirelessly receives supply of power from an external power transmission circuit 3. The power-receiving circuit 6 includes a power-receiving coil that generates an electromotive force in accordance with a change of a magnetic flux due to driving of the power transmission circuit 3. Power that has been received by the power-receiving circuit 6 is supplied to the battery of the battery unit 9. Thus, the battery is charged. The battery includes at least a cell. That is, it is possible to charge the battery using power that has been received by the power-receiving circuit 6. The battery unit 9 and the power-receiving circuit 6 are coupled to one another via the cable 15 and are arranged in positions apart from one another. That is, the cell of the battery and the power-receiving coil of the power-receiving circuit 6 are electrically coupled to one another via the cable 15. The battery unit 9 includes a battery control unit 91 that controls charging of the battery.

In the example illustrated in FIG. 1, the battery unit 9 and the power-receiving circuit 6 are stored in different cases. The bicycle 100 includes a power-receiving coil case that stores the power-receiving circuit 6 and a battery case that stores the battery control unit 91. The power-receiving coil case and the battery case are coupled to one another via the cable 15 and are arranged apart from one another. Specifically, the battery control unit 91 of the battery unit 9 and the power-receiving circuit 6 are provided on different substrates and the substrates are stored separately in the battery case and the power-receiving coil case. The power-receiving coil of the power-receiving circuit 6 and the battery control unit 91 of the battery unit 9 are coupled to one another via the cable 15.

The power transmission circuit 3 supplies power to the power-receiving circuit 6 of the bicycle 100 installed in a parking position in a wireless (non-contact) manner. A wireless power transmission system is not limited to a specific type but, for example, an electromagnetic induction type or a magnetic resonance type may be used. In these types, an AC current in the power-receiving coil of the power-receiving circuit 6 is generated by causing an AC current to flow in a power transmission coil included in the power transmission circuit 3. In the example illustrated in FIG. 1, the power transmission circuit 3 is provided in a power supply stand 11 in a parking lot. The power transmission circuit 3 and the power-receiving circuit 6 are arranged in positions in which the power transmission coil of the power transmission circuit 3 and the power-receiving coil of the power-receiving circuit 6 are opposed to one another in a state in which a bicycle has been installed in a parking position. A specific example of a structure of the power transmission circuit 3 and the power-receiving circuit 6 will be described later.

### [Example of Structure of Charging System]

FIG. 2 is a functional block diagram illustrating an example of a structure of a wireless charging system in the bicycle 100 illustrated in FIG. 1. In FIG. 2, a structure of the power-receiving circuit 6, the battery control unit 91, and the drive unit 12 in the bicycle 100, and the power transmission circuit 3 outside the bicycle 100 is illustrated.

The power transmission circuit 3 includes a resonance circuit 38 on a primary side and a drive circuit 31 that drives the resonance circuit 38. The resonance circuit 38 includes a capacitor C1 and a power transmission coil L1. The resonance circuit 38 is driven, and thereby, an AC current is caused to flow in the power transmission coil L1. When supplying power, the power transmission coil L1 is arranged near the power-receiving coil L2 of the bicycle 100. When an AC current is caused to flow in the power transmission coil L1 of the power transmission circuit 3, a magnetic flux changes and the AC current flows also in the power-receiving coil L2 of the power-receiving circuit 6 due to electromagnetic induction. Thus, power is wirelessly transmitted.

The power-receiving circuit 6 includes a resonance circuit 61 on a secondary side and a rectifier circuit 62. The resonance circuit 61 includes a power-receiving coil L2 and a capacitor C2. The resonance circuit 61 generates an AC current by electromagnetic induction by the AC current of the resonance circuit 38 of the power transmission circuit 3. The rectifier circuit 62 rectifies and filters the AC current that is generated in the resonance circuit 61 and outputs the rectified and filtered AC current to the battery control unit 91. That is, the rectifier circuit 62 converts received AC power to DC power. The DC power that is output from the rectifier circuit 62 is charged in the battery 96 via the battery control unit 91.

The power-receiving circuit 6 includes the resonance circuit 61 on the secondary side and supplies power that is generated in the resonance circuit 61 to the battery 96. The power-receiving circuit 6 is coupled to the battery 96 via the battery control unit 91. In this case, the battery 96 serves as a load that consumes power that has been received by the power-receiving circuit 6, that is, power that is generated in the resonance circuit 61. Therefore, when the power-receiving coil L2 of the power-receiving circuit 6 is disconnected from the battery 96 while receiving power, the load that consumes power that is generated in the resonance circuit 61 is not coupled. As described above, a state in which the load is not coupled to an output terminal that is used for outputting power generated in the resonance circuit 61 is a no-load state of the power-receiving circuit 6, that is, the power-receiving coil L2.

The first switch 2 is provided between the power-receiving circuit 6 and the battery control unit 91. The first switch 2 turns on and off conduction between the power-receiving circuit 6 and the battery control unit 91. Also, the first switch control circuit 21 that controls the first switch 2 is provided in the bicycle 100. The first switch control circuit 21 controls on and off of the first switch 2 in accordance with a voltage that is output from the power-receiving circuit 6 to the battery control unit 91. The first switch control circuit 21 may be configured to include a detection unit that detects a voltage that is output from the power-receiving circuit 6 to the battery control unit 91.

The first switch control circuit 21 controls the first switch 2 such that, when the voltage that is output from the power-receiving circuit 6 to the battery control unit 91 exceeds a threshold, the first switch 2 cuts off conduction between the power-receiving circuit 6 and the battery control unit 91. The threshold may be set to be a level of the voltage of the power-receiving circuit 6, which has risen in a no-load state. As described above, the first switch control circuit 21 controls on and off of the first switch 2, based on the voltage of the power-receiving circuit 6, and thereby, is able to electrically disconnect, when the power-receiving circuit 6 is put in a no-load state and the voltage thereof rises, the power-receiving circuit 6 from the battery control unit 91 and the battery 96.

The first switch 2 is provided in a position that is closer to the power-receiving circuit 6 than to the battery control unit 91. That is, a length of a transmission route between the battery control unit 91 and the first switch 2 is longer than a length of a transmission route between the power-receiving coil L2 of the power-receiving circuit 6 and the first switch 2. Thus, a part to which a DC voltage of the power-receiving circuit 6, which has risen when the voltage of the power-receiving circuit 6 has risen and the first switch 2 has been turned off, is applied may be reduced. As an example, the first switch 2 may be provided between the power-receiving circuit 6 ad the cable 15. That is, the first switch 2 is provided in a position on the transmission route between the power-receiving coil and the cell of the battery, which is closer to the power-receiving coil than to the cell of the battery. The first switch control circuit 21 turns off conduction between the power-receiving coil and the cell of the battery by controlling the first switch, when a voltage that is applied between the power-receiving circuit and the cell of the battery exceeds a threshold.

The battery control unit 91 controls whether or not power that is supplied from the power-receiving circuit 6 via the cable 15 is to be supplied to the battery. Therefore, the battery control unit 91 may be configured to include, for example, a second switch (not illustrated in FIG. 2) which controls conduction and disconnection between the cable 15 and the battery 96.

The battery control unit 91 is also able to perform, in addition to charging control, monitoring of a state of the battery 96. The battery control unit 91 controls whether or not charging to the battery 96 is to be performed in accordance with the state of the battery 96 and/or control from an external unit. For example, when the battery control unit 91 detects an abnormality or full charge of the battery 96, the battery control unit 91 disconnects between the power-receiving circuit 6 and the battery 96 by controlling a charging switch in the battery control unit 91. Thus, when the battery 96 is fully charged, it is possible to prohibit charging. The charging switch is an example of the second switch. The battery control unit 91 may be formed of, for example, a battery management controller (which will be hereinafter referred to as BMC). Note that BMC is sometimes referred to as a battery management unit (BMU) or a battery management system (BMS).

The battery 96 is coupled to the drive unit 12 that is a vehicle load via the battery control unit 91. The battery control unit 91 is also able to control discharging from the battery 96 to the drive unit 12. For example, the battery control unit 91 controls whether or not it is possible to discharge the battery 96 in accordance with the state of the battery 96 and/or control from an external unit (discharging control). Although not illustrated, the bicycle 100 may be configured to further include a control unit that controls operations of the battery control unit 91 and the drive unit 12.

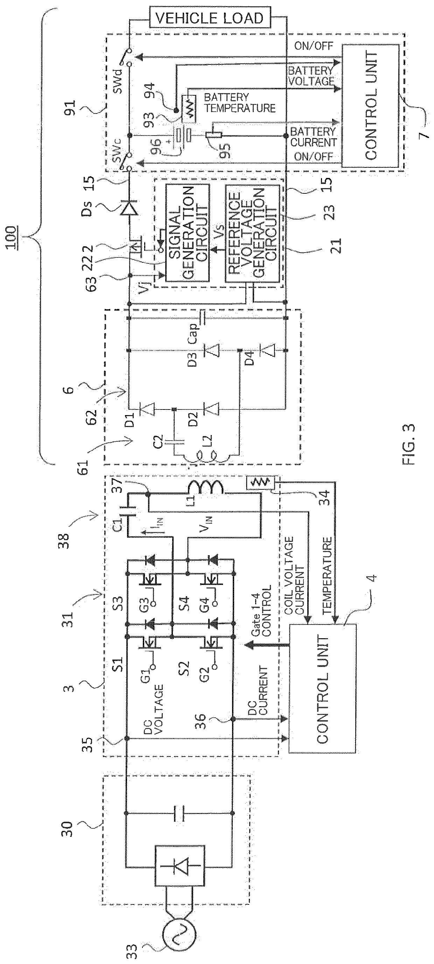

FIG. 3 is a diagram illustrating a specific example of a structure of the power transmission circuit 3, the power-receiving circuit 6, the first switch 2, the first switch control circuit 21, and the battery control unit 91. The power transmission circuit 3, the power-receiving circuit 6, the first switch 2, the first switch control circuit 21, and the battery control unit 91 will be described below.

### <Example of Structure of Power Transmission Circuit>

In the example illustrated in FIG. 3, the power transmission circuit 3 is coupled to a DC power supply unit 30 (a DC power source) and a control unit 4. The power transmission circuit 3 receives supply of DC power from the DC power supply unit 30. An operation of the power transmission circuit 3 is controlled by the control unit 4. The power transmission circuit 3 includes an inverter 31 that is a drive circuit and the resonance circuit 38. The inverter 31 converts a DC current from the DC power supply unit 30 to an AC current and supplies the AC current to the resonance circuit 38.

The DC power supply unit 30 is a stabilized DC power source that generates a DC power source from an AC power source 33. As the DC power supply unit 30, a constant voltage power source (for example, a commercially available AC adaptor) which is controlled such that an output voltage is constant may be used.

The inverter 31 includes two switching element pairs (S1 and S2, and S3 and S4) used for controlling a direction and a timing of input of a current to the resonance circuit 38. Each of the switching element pairs includes switching elements coupled in series. Each switching element pair is coupled between a positive electrode terminal and a negative electrode terminal of the DC power supply unit 30. A node between a switching element pair S1 and S2, which is one of the two switching element pairs, is coupled to one end of the resonance circuit 38. A node between a switching element pair S3 and S4, which is the other switching element pair, is coupled to the other end of the resonance circuit 38. The power transmission coil L1 and the capacitor C1 are coupled in series between the one end and the other end of the resonance circuit 38.

An operation of the inverter 31 is controlled by a drive signal that is input to each of respective gates G1 to G4 of switching elements S1 to S4. The drive signal is supplied from the control unit 4. The control unit 4 supplies, as the drive signal, a PWM signal to the switching elements S1 to S4.

The power transmission circuit 3 includes a DC voltage detection unit 35 used for detecting a DC voltage from the DC power supply unit 30, a DC current sensor 36 that detects a DC current, a coil voltage current detection unit 37 used for detecting a voltage and a current of the power transmission coil (L1), and a temperature sensor 34 that detects a temperature of the power transmission coil (L1). The coil voltage current detection unit 37 may be configured to include a voltage sensor that detects a voltage of the power transmission coil (L1) and a current sensor that detects a current of the power transmission coil (L1). Thus, a DC voltage, a DC current, a voltage and a voltage of the power transmission coil L1, and temperature of the power transmission coil L1 in the power transmission circuit 3 are taken in the control unit 4.

The control unit 4 is able to control the inverter 31, based on at least one of the DC voltage, the DC current, the voltage and the current of the power transmission coil (L1), and the temperature of the power transmission coil (L1) in the power transmission circuit 3.

### <Example of Structure of Power-receiving Circuit>

The resonance circuit 61 of the power-receiving circuit 6 includes the power-receiving coil L2 and the capacitor C2 that are coupled to one another in series. The rectifier circuit 62 includes diodes D1, D2, D3, and D4 and a capacitor Cap. The diodes D1 and D2 that form a pair are coupled to both sides of one end of the resonance circuit 61 so as to face in the same direction. The diodes D3 and D4 that form another pair are coupled to both sides of the other end of the resonance circuit 61 so as to face in the same direction. The capacitor Cap is coupled to the diodes D1 and S2 and the diodes D3 and D4 in parallel. The power-receiving coil L2 and the capacitor C2 are coupled in series between the one end and the other end of the resonance circuit 61.

A reverse voltage prevention diode Ds is provided between the rectifier circuit 62 and the battery control unit 91. A detection unit 63 for a power reception voltage is provided between the reverse voltage prevention diode Ds and the rectifier circuit 62. A current from the battery 96 does not flow on the closer side to the rectifier circuit 62 because of the reverse voltage prevention diode Ds, and therefore, in the detection unit 63, a DC voltage (a reception voltage Vj) caused by power reception via the resonance circuit 61 is detected. Thus, a voltage that is output from the power-receiving circuit 6 to the battery control unit 91 is detected in the detection unit 63.

In the example illustrated in FIG. 3, the reverse voltage prevention diode Ds is provided between the first switch 2 and the cable 15. Thus, for example, application of a voltage of the battery 96 to the first switch control circuit 21 when a short circuit occurs between the first switch control circuit 21 and the cable 15 due to a failure of the first switch 2 is prevented. And thus, it is possible to reduce a failure of the first switch control circuit 21. Note that an arrangement of the reverse voltage prevention diode Ds is not limited to the example illustrated in FIG. 3. For example, the reverse voltage prevention diode Ds may be provided between the first switch 2 and the detection unit 63.

### <Example of Structure of Switch and Switch Control Circuit>

The power-receiving circuit 6 includes the first switch 2 between the rectifier circuit 62 and the battery control unit 91. That is, the first switch 2 is provided between the rectifier circuit 62 and the cell of the battery 96. In the example illustrated in FIG. 3, the first switch 2 is formed of a transistor, such as a field-effect transistor (FET) or the like. Each of a source and a drain of the transistor that forms the first switch 2 is coupled to a corresponding one of the power-receiving circuit 6, that is, the power-receiving coil L2, and the battery control unit 91, that is, the cell of the battery 96. A gate of the transistor that forms the first switch 2 is coupled to the first switch control circuit 21. On and off of the first switch 2 is controlled by a signal that is input to the gate.

The first switch control circuit 21 includes a signal generation circuit 22 and a reference voltage generation circuit 23. The reference voltage generation circuit 23 generates a constant voltage that has been determined in advance and supplies the constant voltage as a reference voltage Vs to the signal generation circuit 22. That is, the reference voltage generation circuit 23 generates a voltage that is a threshold used for determination of control for the first switch 2. The reference voltage generation circuit 23 is able to generate the above-described constant voltage using a voltage that is output from the power-receiving circuit 6.

The signal generation circuit 22 supplies the reference voltage Vs that is supplied from the reference voltage generation circuit 23 and a signal that corresponds to a result of comparison with the reception voltage Vj of the power-receiving circuit 6, which is detected by the detection unit 63, to the gate of the transistor that forms the first switch 2. If the reception voltage Vj does not exceed the reference voltage Vs (Vj < Vs or Vj = Vs), the signal generation circuit 22 supplies a signal that turns on the first switch 2 to the gate of the first switch 2. If the reception voltage Vj is larger than the reference voltage Vs (Vj > Vs), the signal generation circuit 22 supplies a signal that turns off the first switch 2 to the gate of the first switch 2. It is enabled by the above-described structure to cut off, if the reception voltage Vj of the power-receiving circuit 6, which is detected by the detection unit 63, exceeds the reference voltage Vs, connection between the power-receiving circuit 6 and the battery control unit 91, that is, connection between the power-receiving coil L2 and the cell of the battery 96.

### <Example of Structure of Battery Control Unit>

The battery control unit 91 monitors a state of the battery 96 and controls charging and discharging of the battery 96. The battery control unit 91 includes a control unit 7. The control unit 7 is formed of, for example, a processor, such as a CPU or the like. Also, the battery control unit 91 includes a charging switch SWc used for permitting or prohibiting charging into the battery 96 and a discharging switch SWd used for permitting or prohibiting discharging into the vehicle load from the battery 96. The battery control unit 91 further includes a current sensor 95 that detects a charging and discharging current of a battery, a battery voltage detection circuit 94 that detects a voltage of the battery 96, and a temperature sensor 93 that detects temperature of the battery. The battery 96 includes, for example, cells of a plurality of lithium ion batteries. The battery voltage detection circuit 94 detects a voltage for each cell and a voltage (an overall cell voltage) of the cells as a whole.

An information of the current of the battery 96, the voltage of the battery 96, and the temperature of the battery 96 are transmitted to the control unit 7. Also, the control unit 7 supplies a signal that controls on and off of the charging switch SWc and the discharging switch SWd. The control unit 7 is able to control prohibition or permission of charging and prohibition or permission of discharging, based on the power reception voltage, the current of the battery 96, the voltage of the battery 96, and the temperature of the battery 96. Note that, separately from the CPU of the control unit 7, a control IC that performs control of charging and discharging may be provided in the battery control unit 91.

The charging switch SWc is provided between the cable 15 and the battery 96. The charging switch SWc controls connection and disconnection between the power-receiving circuit 6 and the battery 96. That is, whether or not power that is supplied from the power-receiving circuit 6 via the cable 15 is to be supplied to the battery 96 is determined depending on on and off of the charging switch SWc.

Also, the charging switch SWc is provided between the first switch 2 and the cell of the battery 96. In other words, the first switch 2 is provided between the charging switch SWc and the power-receiving circuit 6. In the structure illustrated in FIG. 3, the length of a transmission route between the first switch 2 and the battery control unit 91 may be a length of a transmission route between the first switch 2 and the charging switch SWc. In other words, the first switch 2 is provided on a transmission route between the power-receiving coil L2 and the charging switch SWc. A length of a transmission route between the first switch 2 and the charging switch SWc is longer than a length of a transmission route between the first switch 2 and the power-receiving coil L2. In other words, the first switch 2 is arranged in a position that is closer to the power-receiving coil L2 than to the charging switch SWc. Thus, it is possible to reduce, on the transmission route, a range in which the reception voltage that has risen in a no-load state is applied.

As described above, the charging switch SWc is an example of the second switch that is provided in a position on the transmission route between the power-receiving coil and the cell of the battery, which is closer to the cell of the battery than to the first switch. The control unit 7 that controls on and off of the charging switch SWc includes a second switch control circuit that controls the second switch and turns on and off conduction between the power-receiving coil and the cell of the battery.

Note that, although illustration is omitted in FIG. 3, as an example, when a p-channel MOSFET is used for the charging switch SWc, the charging switch SWc may be formed of two FETs. In this case, to a drain of one of the two FETs, a source of the other one of the FETs is coupled. That is, the two FETs are coupled so as to face in opposite directions to one another. Thus, it is possible to control, by the charging switch SWc, disconnection and conduction of a current from the cable 15 to the battery 96 and a current from the battery 96 to the cable 15. Similarly, the discharging switch SWd may be formed of two p-channel FETs that are coupled so as to face in opposite directions to one another. Thus, it is possible to control, by the discharging switch SWd, disconnection and conduction of a current from the vehicle load to the battery 96 and a current from the battery 96 to the vehicle load.

### [Operation Example]

When the resonance circuit 38 is driven by the inverter 31 of the power transmission circuit 3, an AC voltage is generated in the resonance circuit 61 of the power-receiving circuit 6. The AC voltage is converted to a DC voltage by the rectifier circuit 62. When both of the first switch 2 and the charging switch SWc are on, the DC voltage that is output from the rectifier circuit 62 is applied to the battery 96. Thus, the battery 96 is charged. That is, power that has been received by the power-receiving circuit 6 is consumed by the battery 96.

When, while the power-receiving circuit 6 is receiving power, the battery 96 is fully charged, the control unit 7 of the battery control unit 91 turns off the charging switch SWc and disconnects the battery 96 and the power-receiving circuit 6 from one another. When the charging switch SWc is turned off, there is no longer a load that consumes power that has been generated in the resonance circuit 61 of the power-receiving circuit 6. The power-receiving circuit 6 is put in a no-load state. When power reception in the no-load state continues, the DC voltage that is output from the rectifier circuit 62 rises. When the DC vullage rises and the reception voltage Vj that is detected by the detection unit 63 exceeds the reference voltage Vs, the first switch control circuit 21 turns off the first switch 2. Because the first switch 2 is turned off, a section in which the DC voltage is applied is between the resonance circuit 61 and the first switch 2. The DC voltage that has risen is not applied to a line and a circuit element that are closer to the cell of the battery 96 than to the first switch 2.

In the above-described operation, in a no-load state, a range in which the DC voltage is applied is limited to between the first switch 2 and the power-receiving coil L2. Therefore, a rise of a voltage in the line and circuit element that are closer to the cell of the battery 96 than to the first switch 2 is suppressed. Therefore, restrictions on the length of the transmission line between the power-receiving coil L2 and cell of the battery 96 or the like are relaxed. As a result, the degree of freedom of a layout is increased.

As described above, in the structure illustrated in FIG. 3, in the battery control unit 91, a charging cutoff circuit including the charging switch SWc that is an example of the second switch is provided. When the battery 96 is fully charged, the charging cutoff circuit forcibly disconnects between the power-receiving circuit 6 and the battery 96 before power reception of the power-receiving circuit 6 is stopped. Thus, it is possible to prevent overcharging of the battery 96. The charging cutoff circuit is arranged near the battery 96. Therefore, when the power-receiving circuit 6 and the battery control unit 91 are arranged in positions apart from one another, a length of a transmission line between the power-receiving circuit 6 and the charging cutoff circuit is increased.

In the above-described structure, when the charging switch SWc of the battery control unit 91 is turned off before transmission of power from the power transmission circuit 3 to the power-receiving circuit 6 is stopped and the battery 96 is disconnected from the power-receiving circuit 6, electric energy is continued to be stored in the power-receiving circuit 6. As a result, the voltage of the power-receiving circuit 6 rises. At this time, the first switch 2 is turned off, and thereby, it is possible to prevent the generation of a boosting potential on an entire long line from the power-receiving circuit 6 to the charging cutoff circuit that is arranged closer to the battery 96. In this example, conduction between the power-receiving coil L2 and the cell of the battery 96 is turned off by the charging switch SWc that is an example of the second switch, and thereby, a voltage that is applied between the power-receiving coil L2 and the cell of the battery 96 rises. If the voltage that has risen exceeds a threshold, the first switch 2 is controlled by the first switch control circuit 21 such that conduction between the power-receiving coil L2 and the cell of the battery 96 is turned off.

Also, when the battery unit 9 is attachable and removable, there is a probability that the battery unit 9 is removed while the power-receiving circuit 6 is receiving power. When the battery unit 9 is removed, a connection terminal of the battery unit 9 of the bicycle 100 is exposed. In this case, the first switch 2 is turned off, and thereby, it is possible to prevent the generation of a high potential due to an increased voltage in the exposed connection terminal. That is, it is possible to prevent, when the battery 96 is removed while power is wirelessly charged, the generation of an overvoltage in the exposed terminal. The battery unit 9 includes a battery case that stores the cell of the battery. A structure in which the battery unit 9 is attachable and removable is a structure in which the battery case is attachable to and removable from a vehicle. As described above, in a case in which the battery case is attachable to and removable from a vehicle, when the battery case is removed from the vehicle, the contact point that couples a transmission line in the battery case and a transmission line outside the battery case to one another is cut off on the transmission line unit between the power-receiving coil L2 and the battery unit 9. The contact point is an example of the second switch. In this case, both of the contact point of the transmission line in the battery case and the transmission line outside the battery case and the above-described charging switch SWc serve as the second switch.

In the above-described structure, the first switch 2 is provided between the rectifier circuit 62 and the battery control unit 91. Therefore, it is possible to reduce, in a no-load state, a part to which a DC overvoltage that has been converted by the rectifier circuit 62 is applied.

Also, in the above-described structure, the first switch control circuit 21 is operated by power that has been received by the power-receiving circuit 6, that is, the power-receiving coil L2. Therefore, for example, as compared to a case in which the first switch control circuit 21 is operated by an external power source, such as the battery 96 or the like, operational stability is increased. Also, it is possible to simplify a structure of the first switch control circuit 21. Note that, in FIG. 3, similar to the reference voltage generation circuit 23, a power source of the signal generation circuit 22 may be a voltage that is output from the power-receiving circuit 6. As described above, due to a structure in which the first switch 2 is controlled by power that has been received by the power-receiving circuit 6, power supply from the battery 96 (outside the power-receiving circuit 6) which is mounted on a vehicle to the first switch control circuit 21 is unnecessary. Therefore, it is possible to reduce, by a simple structure, spread of an overvoltage.

Also, in the above-described structure, in addition to the charging switch SWc, the first switch 2 is further provided. Therefore, even when the charging switch SWc is not operated due to a defect of a function of the battery control unit 91, it is possible to prevent, by the first switch 2, an overvoltage of the battery. That is, each of the first switch 2 and the first switch control circuit 21 has a function of overcharging protection for the battery 96.

### [Example of Form of Storage of Power-receiving Circuit]

In this embodiment, as described above, each of the power-receiving circuit 6 and the battery control unit 91 is stored individually in a separate case. That is, the power transmission coil L1 is stored in the power-receiving coil case and the cell of the battery 96 is stored in the battery case. The power-receiving circuit 6 is formed on a power-receiving circuit substrate arranged in the power-receiving coil case. The cable 15 is coupled to the power-receiving circuit substrate. The cable 15 is pulled out to the outside of the power-receiving coil case that stores the power-receiving circuit 6.

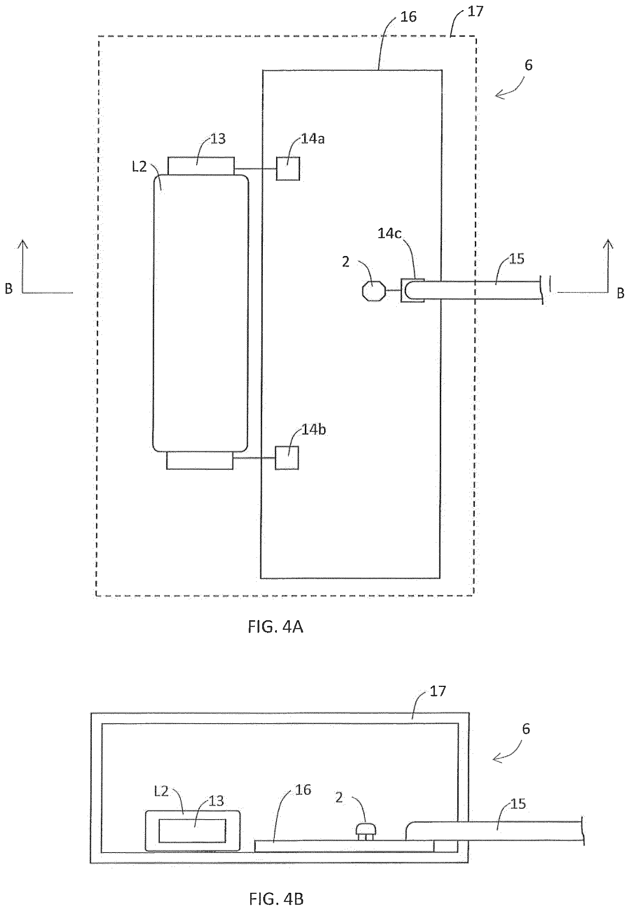

FIG. 4A is a plan view illustrating an example of a structure inside the power-receiving coil case in which the power-receiving circuit 6 is stored. FIG. 4B is a cross-sectional view illustrating a cross-sectional structure taken along the line B-B in FIG. 4A. In FIG. 4A, a power-receiving coil case 17 is indicated by a dotted line and the power-receiving coil case 17 is perspectively illustrated to depict an example of an arrangement of each member in the power-receiving coil case 17.

In the example illustrated in FIG. 4A, in the power-receiving coil case 17, a power-receiving circuit substrate 16 on which the power-receiving circuit 6 is formed is arranged. The power-receiving coil L2 of the power-receiving circuit 6 is formed of a wire that is wound about a core 13. Each of ends of the wire pulled out from the power-receiving coil L2 is coupled to a corresponding one of terminals 14a and 14b of the power-receiving circuit substrate 16. The power-receiving circuit substrate 16 is a substrate to which the power-receiving coil L2 is electrically coupled and also a substrate located closest to the power-receiving coil L2. The power-receiving circuit 6, a circuit element of the first switch control circuit 21, and the first switch 2 are mounted on the power-receiving circuit substrate 16. In FIG. 4A, illustration of other circuit elements than the first switch 2 and an interconnect pattern on the power-receiving circuit substrate 16 is omitted. The first switch 2 is coupled to a terminal 14c and an end of the cable 15 is coupled to the terminal 14c. As illustrated in FIG. 4B, the cable 15 passes through the power-receiving coil case 17 and is pulled out to the outside of the power-receiving coil case 17. That is, at least a part of the cable 15 is arranged outside the power-receiving coil case 17.

Note that a shape of the power-receiving coil L2 of the power-receiving circuit 6 is not limited to the example illustrated in FIG. 4A. For example, a structure in which the core 13 is not provided in a core of the power-receiving coil L2 may be employed. Also, although the power-receiving coil L2 illustrated in FIG. 4A is a solenoidal type coil, the power-receiving coil L2 may be, for example, a circular coil or some other arbitrary type coil.

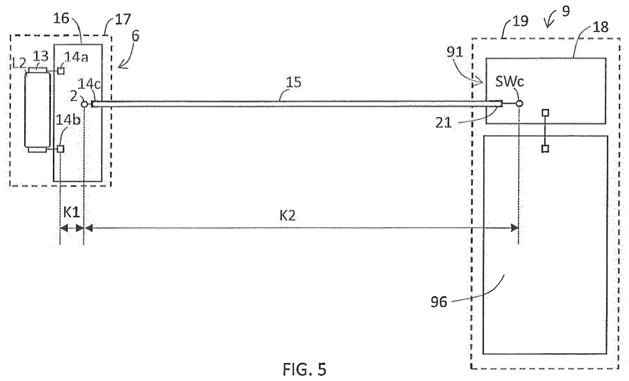

FIG. 5 is a plan view illustrating an example of a structure inside the battery case in which the battery control unit 91 and the cell of the battery 96 are stored. A power-receiving circuit 6 of FIG. 5 corresponds to the power-receiving circuit 6 of FIG. 4A. In FIG. 5, a battery case 19 of the battery unit 9 is indicated by a dotted line and the battery case 19 is perspectively illustrated to depict an example of an arrangement of each member in the battery case 19. A battery control substrate 18 on which the battery control unit 91 is formed is arranged in the battery case 19. The battery control substrate 18 is coupled to the cell of the battery 96. An IC of the processor that forms the control unit 7, the charging switch SWc, and the discharging switch SWd illustrated in FIG. 3 are mounted on the battery control substrate 18. The control unit 7 is an example of the second switch control circuit. In FIG. 5, illustration of other circuit elements than the charging switch SWc and an interconnect pattern on the battery control substrate 18 is omitted.

In the example illustrated in FIG. 5, at least a part of the cable 15 that electrically couples the cell of the battery 96 and the power-receiving coil L2 is arranged outside the battery case 19. The charging switch SWc that is an example of the second switch is provided in the battery case 19.

In the example illustrated in FIG. 5, the cable 15 pulled out from the power-receiving coil case 17 of the power-receiving circuit 6 is inserted inside the battery case 19 of the battery control unit 91 and is coupled to a terminal 21 of the battery control substrate 18 of the battery control unit 91. In this example, a transmission route of a section K2 between the first switch 2 and the charging switch SWc is longer than a transmission route of a section K1 between the power-receiving coil L2 and the first switch 2. This is an example of a case in which the length of the transmission route between the cell of the battery 96 and the first switch 2 is longer than the length of the transmission route between the power-receiving coil L2 of the power-receiving circuit 6 and the first switch 2.

As described above, the first switch 2 is provided on the power-receiving circuit substrate 16 on which the power-receiving circuit 6 is provided and the power-receiving circuit substrate 16 is stored in the power-receiving coil case 17, so that a rise of a voltage in a no-load state does not occur outside the power-receiving coil case 17. That is, a rise of a voltage when the power-receiving circuit 6 is put in a no-load state does not occur in the cable 15 outside the power-receiving coil case 17. Thus, it is not necessary to increase pressure resistance of a device coupled to a subsequent stage of the power-receiving circuit 6 to a level at which the device is able to resist a rise of a voltage in a no-load state. Also, restrictions on the length of the cable 15 are relaxed.

### [Modified Examples]

The present teaching is not limited to the above-described embodiment. For example, some other circuit element may be added to the power transmission circuit 3 and the power-receiving circuit 6. Also, the vehicle 100 may further include a communication device that performs a wireless communication with a device on a transmission side which includes the power transmission circuit 3.

A structure of the first switch 2 and the first switch control circuit 21 is not limited to the example illustrated in FIG. 3. For example, although the first switch 2 is provided between the rectifier circuit 62 and the battery control unit 91, the first switch 2 may be provided between the rectifier circuit 62 and the resonance circuit 61. For example, if the rectifier circuit 62 is configured as a part of the battery control unit 91, not the power-receiving circuit 6, the first switch 2 is provided between the rectifier circuit 62 and the resonance circuit 61.

A structure of the first switch control circuit 21 is not limited to a configuration including the signal generation circuit 22 and the reference voltage generation circuit 23, which has been described above. For example, the first switch control circuit 21 may be formed of a computer, such as a microcomputer or the like. The charging control circuit of the battery control unit 91 is also not limited to a structure including the charging switch SWc. Also, each of the first switch 2 and the charging switch SWc may be formed of an electromagnetic switch, instead of a semiconductor element, such as a FET, some other transistor, or the like.

A structure of the resonance circuits 38 and 61 is not limited to the examples of the above-described embodiment. Although, in the above-described examples, each of the resonance circuits 38 and 61 has a structure including an inductor and a capacitor that are coupled to one another in series, at least one of the resonance circuits 38 and 61 may have a structure including an inductor and a capacitor that are coupled to one another in parallel.

A form of a no-load state is not limited to the above-described form. Examples of a case in which the power-receiving circuit 6 is put in a no-load state during power supply include, in addition to a case in which a load (for example, a battery) coupled to the power-receiving circuit 6 is removed, a case in which a battery fails, a case in which abnormality in temperature of a battery is detected and the battery and a power-receiving circuit are disconnected, a case in which an interconnect between a power-receiving circuit and a load is cut off, or the like.

A vehicle that is a target of the present teaching is not limited to a bicycle and may be, for example, a motorcycle, a motor-tricycle, or some other straddled vehicle. Also, not only a straddled vehicle but also a four-wheel automobile or some other vehicle is a target of the present teaching.

### REFERENCE SIGNS LIST

- 2: Switch
- 3: Power transmission circuit
- 6: Power-receiving circuit
- 15: Cable
- 16: Substrate
- 17: Case
- 21: Switch control circuit
- 91: Battery control unit
- 96: Battery
- L1, L2: Coil

## Claims

1. A vehicle comprising:
a power-receiving coil that wirelessly receives power from a power transmission coil;
a transmission route unit that electrically couples the power-receiving coil and a cell of a battery via a cable;
a first switch that is provided on the transmission route unit and turns on and off conduction between the power-receiving coil and the cell of the battery; and
a first switch control circuit that controls the first switch and turns on and off conduction between the power-receiving coil and the cell of the battery,
wherein the first switch is provided in a position on a transmission route between the power-receiving coil and the cell of the battery, which is closer to the power-receiving coil than to the cell of the battery and, is controlled by the first switch control circuit so as to, when a voltage that is applied between the power-receiving coil and the cell of the battery exceeds a threshold, turn off conduction between the power-receiving coil and the cell of the battery.

2. The vehicle according to claim 1, further comprising:
a power-receiving coil case that stores the power-receiving coil,
wherein at least a part of the cable that electrically couples the power-receiving coil and the cell of the battery is arranged outside the power-receiving coil case, and
the first switch is provided in the power-receiving coil case.

3. The vehicle according to claim 2,
wherein the first switch control circuit is provided in the power-receiving coil case.

4. The vehicle according to any one of claims 1 to 3,
wherein the first switch is provided on a power-receiving circuit substrate to which the power-receiving coil is electrically coupled.

5. The vehicle according to any one of claims 1 to 4,
wherein the first switch control circuit is provided on a power-receiving circuit substrate to which the power-receiving coil is electrically coupled.

6. The vehicle according to any one of claims 1 to 5, further comprising:
a rectifier circuit that converts an AC voltage generated in the power-receiving coil to a DC voltage,
wherein the first switch is provided between the rectifier circuit and the cell of the battery.

7. The vehicle according to any one of claims 1 to 6, further comprising:
a second switch that is provided on the transmission route unit and turns on and off conduction between the power-receiving coil and the cell of the battery,
wherein the second switch is provided in a position on the transmission route between the power-receiving coil and the cell of the battery, which is closer to the cell of the battery than to the power-receiving coil and the first switch, and
the first switch control circuit controls the first switch such that, when conduction between the power-receiving coil and the cell of the battery is turned off by the second switch, and thereby, a voltage that is applied between the power-receiving coil and the cell of the battery exceeds a threshold, the first switch turns off conduction between the power-receiving coil and the cell of the battery.

8. The vehicle according to claim 7, further comprising:
a battery case that stores the cell of the battery,
wherein at least a part of the cable that electrically couples the cell of the battery and the power-receiving coil is arranged outside the battery case, and
the second switch is provided in the battery case.

9. The vehicle according to claim 7, further comprising:
a battery case that stores the cell of the battery,
wherein at least a part of the cable that electrically couples the cell of the battery and the power-receiving coil is arranged outside the battery case, and
the second switch is a contact point of the transmission line unit that is cut off when the battery case is removed from the vehicle.

10. The vehicle according to any one of claims 7 to 9, further comprising:
a second switch control circuit that controls the second switch and turns on and off conduction between the power-receiving coil and the cell of the battery.

11. The vehicle according to claim 8 or 9, further comprising:
a second switch control circuit that controls the second switch and turns on and off conduction between the power-receiving coil and the cell of the battery,
wherein the second switch control circuit is provided in the battery case.

12. The vehicle according to any one of claims 1 to 11,
wherein the first switch control circuit is operated by power that has been received by the power-receiving coil.
